Europäisches Patentamt

European Patent Office

Office européen des brevets

(19)

(11) Numéro de publication : **0 290 510 B1**

(12)

# FASCICULE DE BREVET EUROPEEN

(45) Date de publication du fascicule du brevet :
03.04.91 Bulletin 91/14

(51) Int. Cl.⁵ : **B60P 3/10, B63C 5/02**

(21) Numéro de dépôt : **87907234.6**

(22) Date de dépôt : **28.10.87**

(86) Numéro de dépôt international :
**PCT/FR87/00426**

(87) Numéro de publication internationale :
**WO 88/03099 05.05.88 Gazette 88/10**

(54) DISPOSITIF DE MANUTENTION, DE TRANSPORT ET DE STOCKAGE DE BATEAUX DE PLAISANCE.

(30) Priorité : 31.10.86 FR 8615306
14.09.87 FR 8712697

(43) Date de publication de la demande :
17.11.88 Bulletin 88/46

(45) Mention de la délivrance du brevet :
03.04.91 Bulletin 91/14

(84) Etats contractants désignés :
AT BE CH DE FR GB IT LI LU NL SE

(56) Documents cités :
EP-A- 0 063 651
FR-A- 2 076 652
FR-A- 2 532 895
US-A- 4 114 920

(73) Titulaire : GLEONEC, Jean-Francis
La Grande Halte
F-29133 la Foret Fouesnant (FR)

(72) Inventeur : GLEONEC, Jean-Francis
La Grande Halte
F-29133 la Foret Fouesnant (FR)

(74) Mandataire : Dubreuil, Annie
Cabinet DUBREUIL Le Suffren 23 rue des
Peupliers
F-56100 Lorient (FR)

## Description

L'invention concerne un dispositif qui, à partir de la cale d'un port de plaisance, permet la mise à l'eau de bateaux ainsi que la sortie de l'eau des dits bateaux, le transport sur route et, ensuite, le stockage, même dans un garage ou hangar, sans la coopération d'aucune grue ni système de levage d'appoint. Elle concerne également des accessoires adaptables sur de tels dispositifs.

On sait qu'il existe sur le marché quelques types de remorques de mise à l'eau et systèmes associés de manutention de bateaux de plaisance qui, malgré leur appellation de "mise à l'eau" permettent en fait seulement leur transport sur route. En effet, si l'on dispose d'une cale ou d'un plan incliné, et même en jouant sur le mouvement des marées, les remorques classiques peuvent être en partie utilisables pour approcher le bateau au plus près de l'eau. Mais ces remorques ne sont ni immergeables, ni adaptées à la mise à flot directe du bateau. Toute tentative d'immersion de ces remorques se traduit en premier lieu par le grippage des freins et les essais de protection des freins ou du graissage étanche de ceux-ci se sont soldés par un échec technique et des coûts excessifs.

Certains dispositifs faisant appel à un système intermédiaire, tel qu'un ber roulant, servant de berceau au bateau, et placé ensuite sur une remorque ont apporté une certaine solution au problème. Néanmoins, ces dispositifs présentent deux inconvénients majeurs, le premier étant la nécessité pour la remorque de disposer de rampes inclinées jour la montée et la descente du ber, comme c'est le cas pour les remorques de transport d'autos et le second étant que l'ensemble ber-bateau se trouve hissé sur la remorque, ce qui remonte considérablement le centre de gravité de l'ensemble avec les dangers de dévers que cela peut représenter.

Enfin, le stockage de cet ensemble ber-bateau même séparé de la remorque peut présenter des difficultés de passage en hauteur dans un garage ou hangar à plafond relativement bas du fait que les bers connus n'ont pas de possibilité de réglage limitant leur encombrement en hauteur. Un dispositif selon le préambule de la revendication 1 est par exemple divulgué dans FR-A-2 076 652.

La présente invention a pour but de pallier ces inconvénients et a pour objet un dispositif faisant appel à la combinaison d'un ber roulant et d'une remorque parfaitement adaptés pour la mise à flot directe d'un bateau de plaisance ou à son extraction de l'eau en évitant d'une part l'immersion de la remorque et ceci sans le recours d'aucun moyen de levage accessoire et sans risque d'endommagement du bateau et permettant d'autre part le transport sur route dans des conditions de sécurité optimale grâce à son centre de gravité placé le plus bas possible, ainsi que le stockage aisé du bateau dans un garage ou hangar de passage limité, notamment en hauteur.

L'invention concerne plus précisément un dispositif de manutention, de transport et de stockage du bateau de plaisance du type comportant un ber destiné à porter le bateau, l'ensemble ber-bateau étant rendu solidaire d'une remorque ; caractérisé en ce que le châssis de la remorque (1) est en forme de "U", un jeu d'essieux indépendant (120, 130) équipant chacun des longerons (12, 13) du "U", de telle sorte que le ber (2) vienne en roulant s'encastrer dans ledit "U" ; le ber (2) et la remorque (1) étant équipés de moyens coopérant entre eux pour assurer le relevage, la descente et la solidarisation du ber (2) à la remorque (1).

La présente invention concerne également un accessoire dit chandelle hydraulique dans la suite de la description, disposant de réglages multiples, notamment en hauteur et en orientation, chandelle se terminant par une platine, elle-même orientable de telle sorte qu'une pluralité de telles chandelles constituent un berceau adaptable à différents types de carène.

L'invention sera mieux comprise à l'aide des explications qui vont suivre et des figures jointes, parmi lesquelles :

- la figure 1 montre une vue générale du dispositif, objet de l'invention, au cours d'une opération d'extraction ou de mise à l'eau d'un bateau ;
- la figure 2 représente schématiquement l'association du ber et de la remorque conformément à l'invention ;
- la figure 3 représente en élévation un système de fourche de centrage et de positionnement en longueur du bateau sur le ber, la fourche étant solidaire du ber ;
- la figure 4 est le même système vu en plan ;
- la figure 5 est une vue arrière de l'ensemble du dispositif, où l'on voit le ber roulant porteur du bateau qui vient d'être positionné par roulement dans la remorque ;
- la figure 6 est la même vue arrière du dispositif ber-bateau-remorque, mais avec l'ensemble ber-bateau positionné dans la remorque en position pour le transport ;
- la figure 7 est une vue transversale de l'ensemble du dispositif objet de l'invention, prêt pour le transport ;
- la figure 8 montre l'ensemble ber-bateau prêt au stockage ;
- la figure 9 est une coupe d'une chandelle hydraulique adaptable sur un dispositif selon l'invention ;
- la figure 10 est une vue selon la flèche (A) de la figure 8 ;
- la figure 11 montre un longeron d'une remorque de bateau sur lequel on a représenté trois chandelles hydrauliques dont les vérins occupent différentes positions.

Pour plus de clarté, les mêmes éléments portent les mêmes références dans toutes les figures.

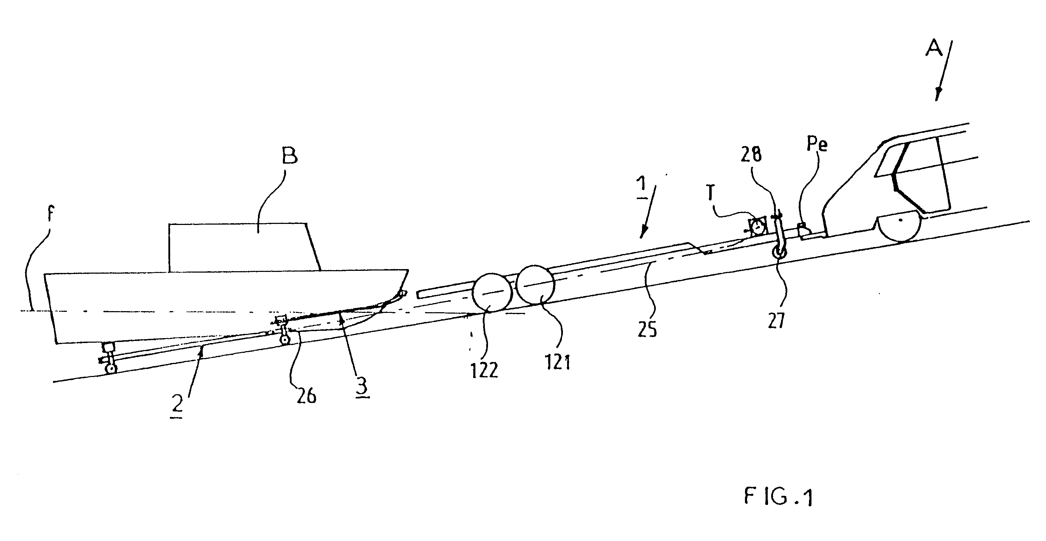

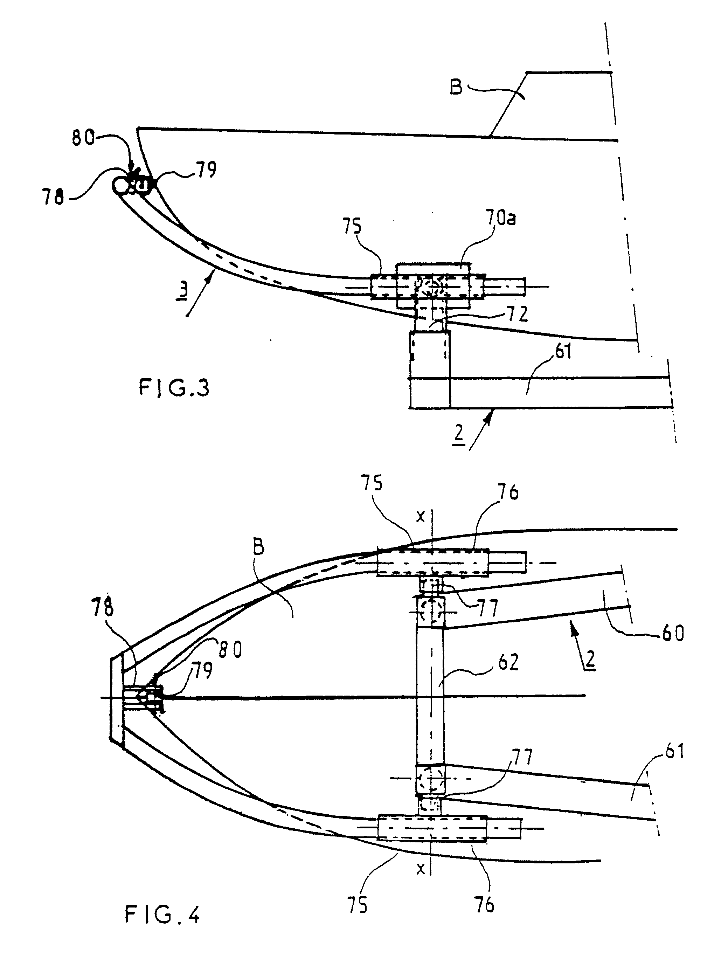

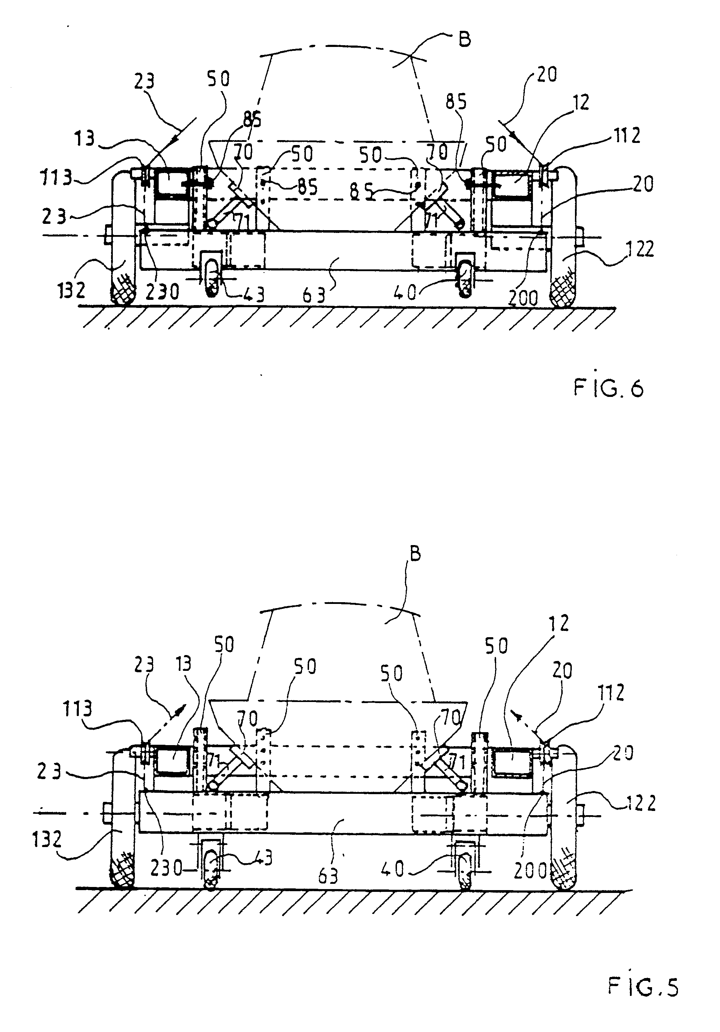

Comme le montrent les figures 1 à 7, le dispositif de manutention, de transport et de stockage de bateaux de plaisance objet de l'invention est constitué de trois parties principales : une remorque (1), un ber roulant (2), une fourche (3) de centrage et de positionnement en longueur du bateau (B), solidaire du ber (2).

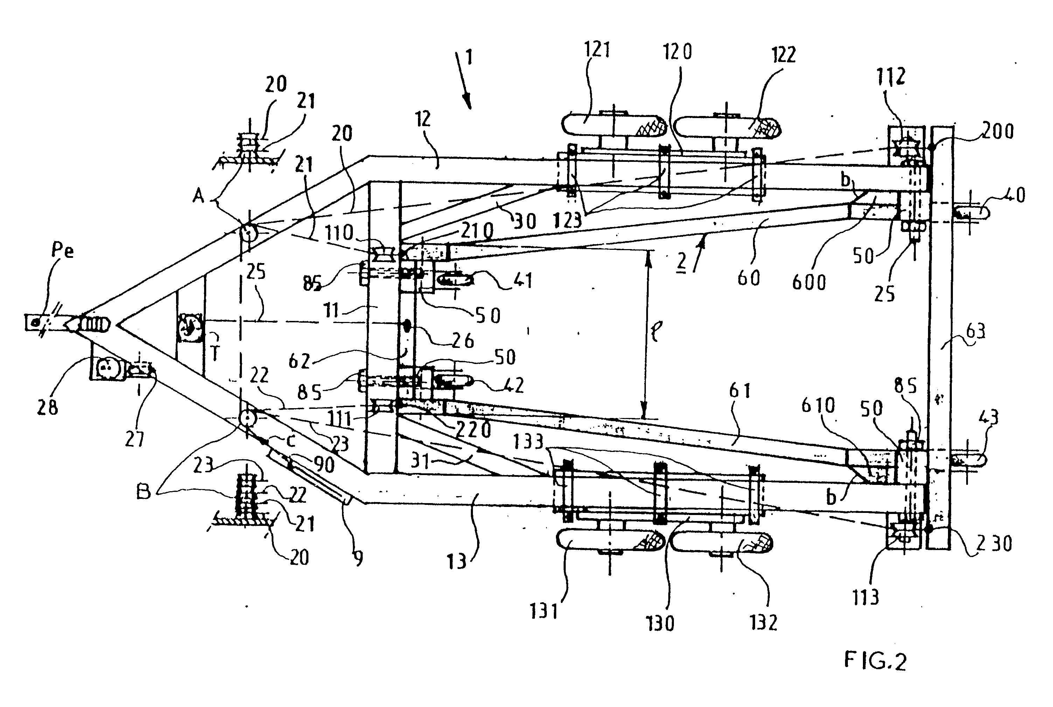

Selon une caractéristique importante de l'invention, et comme le montre la figure 2, la remorque (1) se présente à l'avant sous la forme d'un V prolongé par un châssis en U constitué d'une traverse avant (11) faisant la liaison entre la partie en V et le U et de deux longerons (12) et (13), le tout en tube d'acier carré dont les dimensions sont adaptées aux charges à manipuler.

Cette forme de chassis en U permet aux longerons (12) et (13) et à la traverse avant (11) d'encadrer le ber (2).

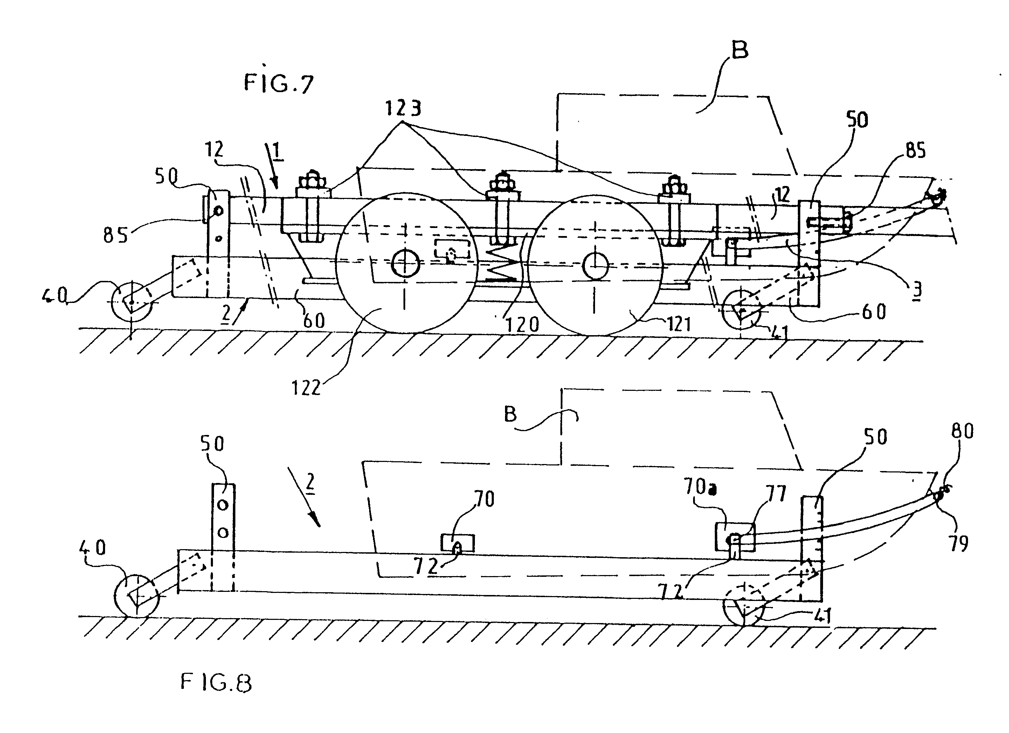

Chacun des longerons (12) et (13) reçoit au moins un essieu (120 et 130) porteur respectivement chacun d'une ou deux roues (121-122) et (131-132). Une des particularités de ces essieux (120) et (130) est qu'ils peuvent être avancés ou reculés le long de chaque longeron (12) et (13), comme schématisé sur :es figures 2 et 7 par l'intermédiaire de brides (123) et (133).

Sur la barre transversale (11) de la remorque (1) et à l'extrémité des longerons (12) et (13) sont fixés des galets (110), (111), (112) et (113) sur lesquels vont s'appuyer des câbles (20), (21), (22), (23), dont la fonction est de hisser le ber (2) et de le redescendre. Pour cela, chaque extrémité du câble est solidaire du ber aux points (200), (210), (220), (230).

Chaque câble va ensuite rouler autour de deux galets placés sur les bras en V de la remorque (1). Sur le galet (A) à deux gorges vont s'enrouler les câbles (20) et (21) alors que le galet (B) à quatre gorges recevra les quatre câbles (20), (21), (22), (23), reliés ensuite en un seul point (C), à un seul câble de raccordement (90), coopérant avec un système de traction (9) solidaire du châssis de la remorque (1) pour assurer par tirage une remontée constante du ber (2).

La rigidification de la partie en U du châssis de la remorque (1) est assurée par deux jambes de force (30) et (31) solidarisées à la barre transversale (11) et aux longerons (12) et (13).

La distance (1) entre les deux jambes de force sur la barre transversale (11) sert de centrage à l'avant (62) du ber (2).

A l'avant de la remorque un treuil (T) est disposé dans l'axe de celle-ci. Sa fonction est de tirer le ber (2) par un câble (25) fixé sur la barre avant (62) du ber (2) au point (26).

Enfin, en amont de ce treuil (T), une roulette (27) réglable en hauteur par un vérin mécanique à vis (28) sert de point d'appui à la remorque (1) non attelée. A l'extrémité de la pointe du V du châssis de la remorque (1) on trouve le point d'ancrage (Pe) au véhicule de traction schématisé en (A) sur la figure 1.

Selon une autre caractéristique importante de l'invention et compte tenu de la forme en U du châssis de la remorque (1), un ber roulant (2) peut être facilement introduit dans la remorque pour être solidarisé et désolidarisé de la remorque (1).

Ce ber roulant (2) immergeable sert de berceau au bateau (B) aussi bien en stockage et pendant le transport que pour la mise à flot ou l'extraction de l'eau du bateau. Comme le montre la figure 2, ce ber (2) est constitué d'un châssis de forme trapézoïdale en tube d'acier de section carrée composé de deux longerons (60) et (61), d'une traverse avant (62) et d'un bandeau (63) servant de traverse arrière et de butée contre l'arrière de la remorque (1). Les dimensions de ces tubes d'acier de section carrée sont adaptées aux charges à manipuler. Il est prévu pour s'encastrer en roulant dans le U de la remorque (1) grâce aux quatre roulettes en plastique (40), (41), (42), (43) escamotables lui permettant de rouler quelque soit la position -escamotée- ou non des roulettes (40), (41), (42), (43) comme le montre les figures 7 et 8. La position escamotée des roulettes est surtout utilisée pendant le transport sur route sur la remorque et le stockage en garage, par exemple.

Aux quatre coins du châssis du ber (2) sont soudés quatre tubes d'acier creux de section carrée (50) servant d'une part au centrage du ber (2) dans le U de la remorque au moment de la sortie de l'eau et d'autre part de point de solidarisation, à la hauteur désirée du ber (2) au châssis de la remorque (1) pour le transport.

La position de ces quatre tubes d'acier creux (50) est prévue de telle sorte que les faces avant des deux tubes fixés à l'avant du ber (2) viennent tangenter la face arrière verticale de la barre transversale (11) de la remorque alors que les faces latérales des deux tubes arrière viennent tangenter les faces intérieures des longerons (12) et (13) de la remorque (1).

Pour le transport, la solidarisation ber-remorque s'effectue par la pose de boulons ou vis (85) traversant, d'une part, les trous pratiqués à cet effet dans le châssis de la remorque et, d'autre part, traversant l'un des différents trous pratiqués sur la hauteur des quatre tubes d'acier verticaux (50) en choisissant le mieux adapté à la hauteur choisie pour le transport à effectuer.

Enfin, à chacune des extrémités du bandeau arrière (63) du ber (2) et à chacune dès extrémités de la traverse avant (62) de ce dernier, sont disposés quatre points d'attache (200) et (230) à l'arrière, et (210) et (220) à l'avant. Sur ces points d'attache viendront s'accrocher respectivement les câbles (20), (21), (22) et (23) qui, comme cela a déjà été dit précédemment, servent à hisser le ber (2) sous l'action du système de traction (9).

Sur les longerons (60) et (61), à l'avant et à l'arrière de ceux-ci, sont disposés des accessoires constitués essentiellement de platines sur lesquelles va reposer le fond du bateau (B).

Ces platines (70) à rotules (71) sont munies de patins en caoutchouc. Leur dimension et leur position le long des longerons (60) et (61) sont calculées pour obtenir une bonne répartition des charges sur le ber (2). Elles sont placées en bout de supports verticaux (72) réglables verticalement et sectoriellement qui sont constitués par des tubes télescopiques.

Selon une autre caractéristique très importante de l'invention, et comme le montrent en particulier les figures (3) et (4) et les figures (7) et (8), les deux supports verticaux (72) définis précédemment des platines avant (70a) servent également de centre de rotation et de support à deux porte-fourche (75). Chacun de ces porte-fourche (75) est constitué d'un fourreau (76), qui s'articule perpendiculairement au milieu de sa longueur sur un axe (77), selon (x x). Dans ces fourreaux (76), chaque branche de la fourche (3) coulisse et après mise à la longueur adaptée à la position la plus adéquate à l'équilibre du bateau (B) sur le ber (2), la fourche (3) est verrouillée au niveau des fourreaux (76) par tout moyen de solidarisation connu tel qu'une bride non représentée.

A la pointe de la fourche (3) est placée une chape (78) dans laquelle l'anneau de l'étrier (79) vient se loger, l'ensemble étant alors solidarisé par une broche ou un bout (80).

Le rôle de cette fourche de centrage (3) et de son support rotatif et coulissant est décrit ci-après.

La remorque (1), attelée au véhicule de traction (A), est amenée, comme le montre la figure 1 sur le plan incliné de la cale du port. La remorque 1 est hors de l'eau et le ber (2) est désolidarisé de la remorque (1) ; il est posé sur ses roulettes (40, 41, 42, 43) qui sont en position haute et il est simplement relié à la remorque (1) par le câble (25) solidaire du treuil (T) de la remorque (1) au point (26). On laisse alors rouler le ber (2) qui s'immerge progressivement. Lorsqu'il est totalement immergé, on manoeuvre le bateau jusqu'à ce que l'anneau de l'étrave du bateau (79) puisse être accouplé à la chape (78) de l'extrémité de la fourche (3). Le bateau (B) se trouve alors centré dans l'axe du ber (2).

Par action sur le treuil (T) et par enroulement du câble (25), l'opération de mise hors d'eau du bateau peut commencer.

Au cours de cette remontée du ber (2) qui roule sur le plan incliné de la cale, les platines avant (70a) vont venir se plaquer contre la coque du bateau alors que les platines arrière ne sont toujours pas en contact avec la coque du bateau.

C'est grâce à l'articulation (77) de la fourche (3) que cette mise en contact des platines arrière avec la coque va s'effectuer automatiquement, le basculement du bateau (B) sur le ber (2) s'effectuant progressivement grâce à la rotation du bateau, autour de l'axe (x x) autour de son point de fixation avant par son anneau (80).

Ainsi, progressivement, en cours de traction du câble (25), le bateau (B) va basculer pour venir s'appuyer sur ces platines arrière (70). Le bateau (B) reposant ainsi sur le ber (2), l'ensemble ber-bateau va être complètement sorti de l'eau.

En poursuivant l'action sur le treuil, on amène alors l'ensemble ber-bateau dans le U de la remorque (1), qui se trouve centré à l'avant entre les deux jambes de force (30) et (31) de la remorque et à l'arrière par les cales (600) et (610) dont les faces (b) facilitent ce centrage. Il suffit alors d'accrocher les câbles de levage (20), (21), (22), (23), aux points prévus sur le ber (2) respectivement (200), (210), (220), (230) et d'élever l'ensemble ber-bateau au niveau du châssis de la remorque (2) par action sur le système de relevage (9) qui tire sur le câble (90) pour libérer du sol les roulettes (40), (41), (42), (43) du ber (2).

Les roulettes (40, 41, 42, 43) étant alors libérées du sol, on peut procéder à l'opération d'escamotage desdites roulettes qui peuvent occuper une position haute, une position basse et toute position intermédiaire. Cette disposition permet de disposer d'une garde au sol optimale.

On peut alors, en agissant sur le système de relevage (9), libérer légèrement le câble (90) et, de ce fait, abaisser l'ensemble ber-bateau le plus bas possible en laissant une garde au sol minimale compatible avec le transport à effectuer.

Il suffit alors de verrouiller l'ensemble ber-remorque par la pose de boulons ou de vis (85) sur les poteaux (50) à travers la traverse (11) et les longerons (12) et (13) de la remorque (1) comme il a été décrit précédemment.

On voit que cette opération de mise hors d'eau du bateau s'est effectuée sans la coopération d'aucune grue ni système de levage d'appoint et sans que la remorque n'ait été immergée. Dans ces conditions, il n'y a plus rien à craindre pour la remorque, ni au niveau de sa structure (elle peut être peinte), ni au niveau du système de freinage.

Arrivé à destination pour le stockage, mais ceci est également vrai pour une remise à l'eau, l'opération inverse à celle décrite précédemment est réalisée ; c'est-à-dire qu'après la libération du verrouillage du ber (2) sur la remorque (1), l'ensemble ber-bateau est remis sur ses roues maintenues en position haute ou escamotées selon que l'on veut procéder à un stockage ou à une mise à l'eau.

Après libération des câbles (20), (21), (22), (23) et libération de l'attache (26) du câble (25), au treuil (T), l'ensemble ber-bateau roule en position basse ou haute vers son aire de stockage ou vers l'eau.

L'équipement du châssis et le système d'accrochage du ber à ce châssis décrit précédemment sont tels que l'ensemble peut rouler sur la voie publique.

Lors de la mise à l'eau ou de la sortie de l'eau du bateau, seul le ber pénètre dans l'eau à l'exclusion du châssis, ce qui présente l'avantage d'éviter notamment le contact de l'eau avec les organes de freinage de la remorque, comme c'est le cas pour les remorques actuellement commercialisées.

Cette combinaison, châssis plus ber, peut également servir au stockage du bateau.

Le Demandeur a conçu des accessoires capables de s'adapter au châssis en U, pour lui permettre d'accomplir une fonction supplémentaire. L'utilisateur de la remorque équipée de ce châssis en U peut, en effet, dans certaines circonstances, ne pas utiliser le ber qui normalement coopère avec ce châssis et souhaiter, par exemple, transporter son bateau d'un point à un autre sans pour autant prévoir de mise à l'eau.

Sur les figures 8 à 11, on voit comment est constituée une chandelle hydraulique (1a), objet de l'invention, et comment deux des organes principaux de ladite chandelle (1a), à savoir le support (2a) et un vérin hydraulique (3a), coopèrent entre eux.

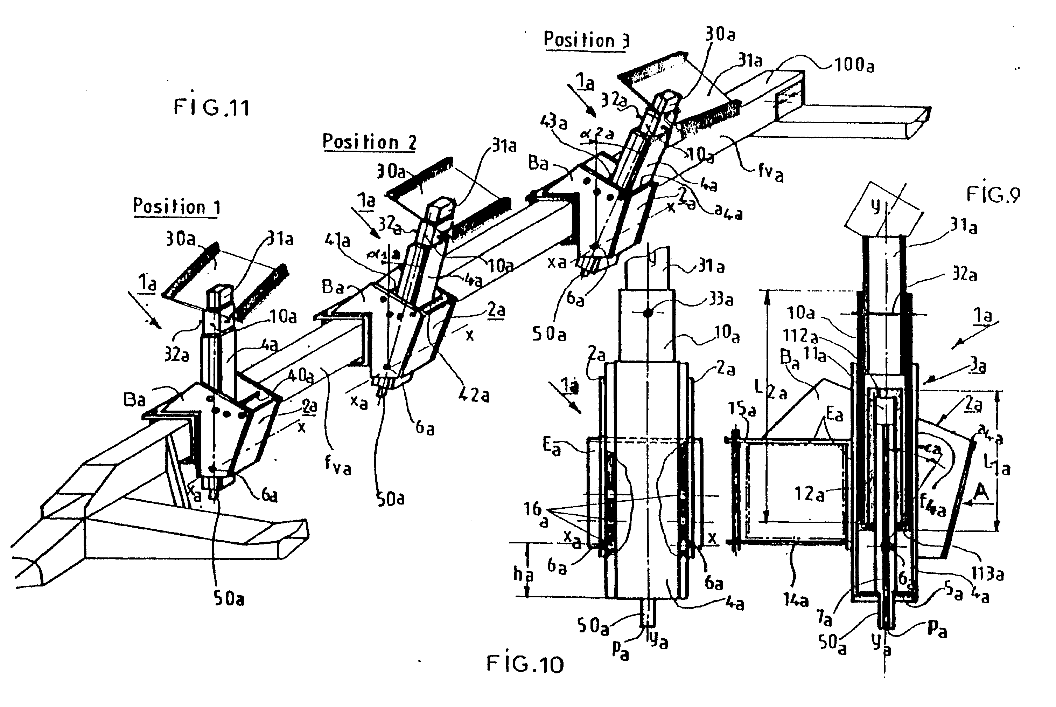

Le support (2a) est une enveloppe de tôle destinée à recevoir en son intérieur un vérin hydraulique (3a). La forme de cette enveloppe (2a) est telle que, comme le montrent les figures 9 et 10, une avancée en forme de bec (Ba) renforcée par une équerre (Ea), permet la pose du support (2a) sur le longeron (100a) du châssis de la remorque à tout endroit adapté au besoin.

Une fois positionné sur le longeron (100a), chaque support (2a) contenant en son intérieur le vérin (3a), peut glisser le long du longeron (100a) et être fixé à celui-ci par une bride (14a) solidaire de l'équerre (Ea) et par des boulons (15a) de longueur appropriée.

Comme cela a été dit précédemment, le vérin (3a) est à l'intérieur du support (2a), ce qui présente l'avantage, à l'inverse des vérins utilisés généralement dans ce type d'application, d'agir aussi directement que possible dans l'axe de la charge et non par l'intermédiaire d'un bras de levier avec le risque de coincement des vérins lors des manipulations.

En ce qui concerne le vérin (3a) et comme on peut le voir sur la figure 9, il est constitué tout d'abord d'un corps (4a) qui est l'élément fixe de ce vérin (3a).

Ce corps (4a) est solidarisé au support (2a) par deux vis (6a) et peut osciller autour d'un axe (xxa) suivant l'angle (αa).

Ce corps fixe (4a) est constitué par un tube à section rectangulaire ou ronde par exemple, mais de préférence carrée, fermé à sa partie inférieure par un fond (5a). Ce fond (5a) est traversé par une tige de vérin (7a) solidaire de celui-ci et épaulée à sa base. Au travers de cette tige (7a) s'effectuera le passage du fluide sous pression provenant d'une pompe (non représentéea) et entrant dans le vérin par l'ajutage (50a) sortant du fond (5a) du corps fixe (4a) du vérin (3a).

Cette tige de vérin (7a) doit être parfaitement centrée selon l'axe (yya) du corps (4a) du vérin (3a).

Dans cette partie fixe qui vient d'être décrite, une partie mobile est adaptée de manière à coulisser librement. Elle est constituée d'un tube cylindrique de vérin (12a) dont l'extrémité supérieure borgne (112a) vient coiffer le sommet de la tige de vérin (7a) en glissant librement sur elle. De longueur (L₁a), fonction du débattement du vérin à obtenir, ce tube cylindre de vérin (12a) est muni à sa base d'une collerette (113a) dont le contour extérieur épouse la forme carrée de préférence de l'intérieur du corps (4a) du vérin (1a).

C'est sur cette collerette (113a) que vient s'appuyer la chandelle mobile (10a) du vérin (3a) qui n'est autre qu'un tube à section rectangulaire, ronde ou carrée de préférence lui-aussi, mais dont les dimensions lui permettent d'une part, de coulisser librement dans le corps fixe (4a) du vérin (3a) et dont la longueur (L₂a) est d'autre part, adaptée à la hauteur recherchée.

Il est intéressant de noter qu'étant simplement enfiler dans le corps (4a) et simplement en appui sur la collerette (113a), une pluralité de chandelles mobiles (10a) de longueurs différentes, prééquipées ou non de platine (30a) peuvent être utilisées.

Il est également remarquable que ces chandelles mobiles (10a) peuvent elles-aussi recevoir dans leur intérieur une autre rallonge (31a) constituée elle-aussi d'un tube à section rectangulaire, ronde ou carrée de préférence, dont les dimensions vont lui permettre de coulisser librement dans la chandelle mobile (10a) que nous avons vue préalablement en appui sur la collerette (113a).

Cette rallonge (31a), qui peut également être ou non prééquipée d'une platine (30a), est percée sur deux flancs opposés de sa section par une pluralité de trous (80a) qui serviront à la positionner à la hauteur désirée dans la chandelle mobile (10a) par la traversée d'une broche (32a) passant au travers d'un trou (33a) spécialement prévu au sommet de la chandelle mobile (10a).

D'autres rallonges peuvent être adaptées ensuite suivant le même schéma en fonction du tirant d'eau du bateau à transporter.

On voit ainsi que sous l'effet de la pression hydraulique (pa) qui s'exerce dans la chambre (11a) ainsi formée entre l'extrémité de la tige de vérin (7a) et le fond (112a) du piston (12a), ledit piston (12a) va s'élever, entraînant dans son mouvement la chandelle mobile (10a), équipée ou non d'une rallonge (31a) et d'une platine (30a), dont la base est en appui sur la collerette (113a) d'embase du piston (12a).

A l'inverse, la libération de la pression (pa) conduit à une descente du piston (12a) et de la chandelle mobile (10a) avec ou sans rallonge (31a) et platine (30a), supportées par la collerette (113a). La fonction du vérin (3a), venant d'être décrite, la fixation de ce vérin (3a) dans son support (2a) est maintenant développée.

Comme on peut le voir sur les figures 10 et 11 et, comme cela a été dit précédemment, le corps (4a) du vérin (3a) est solidaire du support (2a) par deux vis (6a). Afin de pouvoir régler en hauteur le corps (4a) dans son support (2a) et comme on le voit sur la figure 2, une pluralité de trous taraudés (16a) est aménagée à partir d'une hauteur adéquate (ha) dans le corps fixe (4a) à des espaces différents pour recevoir les vis (6a) qui traversent les deux flancs du support (2a) à la base du celui-ci.

Une des caractéristiques de l'invention réside précisément dans la fonction et la position de ces vis (6a). D'une part, elles fixent le vérin (3a) au support (2a), mais elles sont d'autre part le centre de rotation du vérin (3a) dans le support (2a) selon un axe (xxa).

Cette dernière fonction des vis (6a), va être explicitée au moyen de la figure 11 dans laquelle on a représenté trois positions différentes du vérin (3a) dans son support (2a) en schématisant trois chandelles hydrauliques (1a) fixées sur un longeron (100a).

Dans la position 1, le vérin (3a) est vertical, c'est-à-dire perpendiculaire au sol et parallèle au flanc intérieur vertical (fva) du longeron (100a) sur lequel il est appuyé. C'est d'ailleurs dans cette configuration que la coupe de la chandelle hydraulique (1a) a été représentée sur la figure 8. Pour tenir le vérin (3a) dans cette position, une broche (40a) qui traverse le support (2a) de part en part, est disposée. Dans cette configuration, l'angle (αa) est donc égal à 0°.

Dans la position 2, le vérin (3a) est incliné vers l'intérieur de la remorque et s'articule autour de son centre de rotation créé par les vis (6a) pour former avec le flanc vertical intérieur (fva) du longeron (100a), un angle ($\alpha_1$a).

Le vérin (3a) est alors maintenu dans cette position par deux broches (41a) et (42a) qui traversent le support (2a) de part en part, et qui encadrent le corps fixe (4a) du vérin (3a).

Enfin, dans la position 3, une génératrice de la face ($f_4$a) du corps fixe (4a) du vérin (3a) vient buter contre l'arête supérieure du support en ($a_4$a).

Le vérin (3a) est alors maintenu dans cette position par une broche (43a) qui traverse le support (2a) de part en part, formant avec le flanc vertical intérieur (fva) du longeron (100a) un angle ($\alpha_2$a) plus grand que ($\alpha_1$a).

On voit donc qu'ainsi, la chandelle hydraulique (1a), objet de l'invention, est un accessoire permettant, grâce à ses réglages multiples notamment en hauteur et en orientation, de constituer grâce à une pluralité de telles chandelles, un berceau adaptable à différents types de carène.

On voit donc que le dispositif, objet de l'invention, résout de nombreux problèmes qui se posent pour la mise à l'eau des bateaux de plaisance, leur transport et leur stockage.

De plus, ce dispositif, objet de l'invention, présente l'avantage, compte tenu du tonnage relativement limité des bateaux de plaisance et grâce au centre de gravité très bas de l'attelage, d'être utilisable sur route sans dérogation particulière en répondant aux normes et règles de la circulation.

Les applications d'un tel dispositif sont nombreuses. Le chargement et le déchargement se font en souplesse sans risque d'avarie pour le bateau, le transport s'effectue dans des conditions optimales de sécurité, le centre de gravité de l'ensemble tansporté restant le plus bas possible et le stockage dans un garage relativement bas peut être envisagé. Le fait que le bateau reste sur son berceau facilite l'entretien des oeuvres vives du bateau sans manipulation de ce dernier.

Enfin, il est bien entendu qu'en fonction des gammes de bateaux à manutentionner, différents types de remorques homothétiques peuvent être fabriquées sur les mêmes bases sans sortir des limites de l'invention.

## Revendications

1. Dispositif de manutention, de transport et de stockage d'un bateau de plaisance du type comportant un ber destiné à porter le bateau, l'ensemble ber-bateau étant rendu solidaire d'une remorque constituée d'un châssis en forme de "U" se terminant à l'avant par une partie en forme de "V", chacun des longerons (12,13) du "U" étant équipé d'essieux (120, 121) indépendants ; dispositif caractérisé en ce qu'il comporte :

– d'une part, des moyens de levage et de descente constitués par un jeu de câbles (20, 21, 22, 23) solidaires du ber (2) par des points d'attache arrières (200, 230) et des points d'attache avant (210, 220), ces câbles s'appuyant sur des galets (110, 111, 112, 113) solidaires de la remorque (1) et venant rouler autour de deux galets (A) et (B) avant d'être reliés en un seul point (C) à un câble de raccordement (90) à un treuil (9) solidaire du châssis de la remorque (1) ;

– d'autre part, de moyens de solidarisation constitués de quatre tubes (50) placés aux quatre coins du ber (2) rendus solidaires du châssis de la remorque (1) à la hauteur désirée au moyen d'un boulon (85) glissé dans l'un des trous prévus à cet effet dans les tubes (50).

2. Dispositif selon la revendication 1, caractérisé en ce que le ber (2) est équipé de roulettes (40, 41, 42, 43) pouvant occuper deux positions escamotée ou non et permettant au ber (2) de rouler quelque soit cette position.

3. Dispositif selon l'une des revendications précédentes ; caractérisé en ce que sur les longerons (60), (61), à l'avant et à l'arrière de ceux-ci, sont disposés des platines (70) à rotules (71) placés en bout de supports verticaux (72) télescopiques réglables verticalement et sectoriellement.

4. Dispositif selon l'une des revendications précédentes ; caractérisé en ce que les supports verticaux (72) situés à l'avant reçoivent deux porte-fourches (75) constitués d'un fourreau (76) qui s'articulent perpendiculairement au milieu de sa longueur sur un axe (77) selon (XX) de telle sorte que chaque branche de la fourche (3) peut coulisser avant d'être verrouillée pour s'adapter à la longueur assurant le positionnement du bateau (B) sur le ber (2) ; la pointe de la fourche (3) comportant une chape (78) dans laquelle l'anneau de l'étrier (79) vient se loger, l'ensemble étant solidarisé par une broche ou un bout (80), l'architecture de cette fourche (3) assurant le basculement autour de l'axe (XX), automatique et progressif du bateau (B) sur le ber (2).

5. Dispositif selon la revendication 1, caractérisé en ce que le longeron (100a) du châssis est adapté pour recevoir un vérin hydraulique (30a) dont la combinaison du cylindre de vérin (12a) avec une chandelle mobile (10a) supportant une platine (113a) est telle que son action s'exerce pratiquement dans l'axe de la charge.

6. Dispositif selon la revendication 5, caractérisé en ce que le support (2a) de la chandelle (10c) et le vérin (3a) coopèrent avec des moyens d'orientation (6a) et (16a) ainsi qu'avec des broches (40a), (41a), (42a) et (43a) permettant une multiplicité de réglage en hauteur et en orientation angulaire de la chandelle mobile (10c), de sa rallonge éventuelle (31a) et donc de la platine (30a) qu'il porte.

## Ansprüche

1. vorrichtung zur Handhabung, zum Transport und zur Lagerung eines vergnügungsschiffes, vom Typ mit einem zum Tragen des Schiffes bestimmten Ablaufschlitten, wobei die aus Ablaufschlitten und Schiff bestehende Einheit fest mit einem Anhänger verbunden ist, welcher durch ein U-förmiges Gestell gebildet ist, das auf der vorderseite in einem V-förmigen Teil endet, wobei jeder Holm (12, 13) des U mit voneinander unabhängigen Achsen (120, 121) versehen ist, wobei die vorrichtung dadurch gekennzeichnet ist, daß sie umfaßt :
– einerseits Hub- und Absenkmittel, die durch einen Satz von Kabeln (20, 21, 22, 23) gebildet sind, welche mit dem Ablaufschlitten (2) an hinteren Befestigungspunkten (200, 230) und vorderen Befestigungspunkten (210, 220) fest verbunden sind, wobei diese Kabel auf Rollen (110, 111, 112, 113) geführt sind, die fest an den Anhänger (1) angeschlossen sind, sowie um zwei Rollen (A) und (B) herumgeführt sind, bevor sie an einem einzigen Punkte (C) mit einem Anschlußkabel (90) zum Anschließen an eine Winde (9) verbunden sind, die fest im Gestell des Anhängers (1) eingebaut ist ;
– andererseits Mittel zur festen Verbindung, welche aus vier Rohren (50) gebildet sind, die an vier Ecken des Ablaufschlittens (2) angeordnet sind und mit dem Gestell des Anhägers (1) auf der gewünschten Höhe durch einen Bolzen (85) fest verbunden sind, der in eines von mehreren zu diesem Zweck in den Rohren (50) vorgesehenen Löchern eingeschoben ist.

2. Vorrichtung nach Anspruch 1, dadurch gekennzeichnet, daß der Ablaufschlitten (2) mit Rollen (40, 41, 42, 43) ausgestattet ist, die zwei Stellungen einnehmen können, eine zurückgezogene oder nicht zurückgezogene Stellung, die es dem Ablaufschlitten (2) ermöglichen, unabhängig von dieser Stellung zu rollen.

3. vorrichtung nach einem der vorstehenden Ansprüche, dadurch gekennzeichnet, daß an der Vorderseite und an der Rückseite der holme (60, 61) Platten (70) mit Kugelgelenken (71) angeordnet sind, die am Ende von vertikalen Teleskopträgern (72) angeordnet sind, welche senkrecht und sektoriell einstellbar sind.

4. Vorrichtung nach einem der vorstehenden Ansprüche, dadurch gekennzeichnet, daß die senkrechten Träger (72), die an der Vorderseite angeordnet sind, zwei Gabelträger (75) aufnehmen, welche aus einem Futter (76) gebildet sind und senkrecht in der Mitte seiner Länge auf einer Achse (77) entlang (XX) in solcher Weise angelenkt sind, daß jeder Schenkel der Gabel (3) eine Gleitbewegung ausführen kann, bevor er verriegelt wird, um an die Länge angepaßt zu werden, welche die Positionierung des Schiffes (B) auf dem Ablaufschlitten (2) gewährleistet ; wobei die Spitze der Gabel (3) eine Kappe (78) aufweist, worin der Ring des Bügels (79) aufgenommen wird, wobei die gesamte Baugruppe durch einen Schaft oder Stutzen (80) fest zusammengehalten wird und die Konzeption dieser Gabel (3) die automatische und progressive Verschwenkung des Schiffes (B) auf dem Ablaufschlitten (2) um die Achse (XX) ermöglicht.

5. Vorrichtung nach Anspruch 1, dadurch gekennzeichnet, daß der Holm (100a) des Gestells ausgelegt ist, um eine Hydraulikpresse (30a) aufzunehmen, bei welcher die Kombination des zylinders (12a) mit einem beweglichen Schaft (10a), welcher eine Platte (113a) trägt, von solcher Art ist, daß ihre Wirkung praktisch in der Achse der Last orientiert ist,

6. Vorrichtung nach Anspruch 5, dadurch gekennkeichnet, daß der Träger (2a) des Schaftes (10c) und die Presse (3a) zusammenwirken mit Orientierungsmitteln (6a) und (16a) sowie mit Stangen (40a), (41a), (42a) und (43a), die eine vielfalt von Höhen und Winkelorientierungseinstellungen des beweglichen Schaftes (10c), seiner eventuellen Verlängerung (31a) und folglich der davon getragenen Platte (30a) ermöglichen.

## Claims

1. A device for handling, transporting and storing a pleasure boat of the type comprising a cradle intended to carry the boat, the boat-cradle assembly being attached to a trailer formed by a U-shaped chassis terminating at the front in a V-shaped part each of the stringers (12, 13) of the U being provided with independent axles (120, 121), the device being characterised in that it comprises :
   – on the one hand, lifting and lowering means formed by a set of cables (20, 21, 22, 23) secured to the cradle (2) via rear attachment points (200, 230) and front attachment points (210, 220), these cables bearing on pulleys (110, 111, 112, 113) integral with the trailer (1) and running around two pulleys (A) and (B) before being joined at a single point (C) to a cable (90) for connection to a winch (9) fastened to the chassis of the trailer (1) ;
   – on the other hand fastening means formed by four tubes (50) positioned at the four corners of the cradle (2), which are secured to the chassis of the trailer (1) at the required height by means of a bolt (85) slipped into one of the holes provided for this purpose in the tubes (50).

2. A device according to claim 1, characterised in that the cradle (2) is provided with rollers (40, 41, 42, 43) which may assume two positions, retracted and unretracted, and enabling the cradle (2) to roll irrespective of said position.

3. A device according to one of the preceding claims, characterised in that on the stringers (60, 61), at their front and rear, are plates (70) comprising balljoints (71) situated at the ends of vertical telescopic supports (72) which are adjustable vertically and sectorially.

4. A device according to one of the preceding claims, characterised in that the vertical supports (72) are situated at the front receive two fork-holders (75) formed by a sheath (76) articulated perpendicularly halfway along its length on a spindle (77) about (XX) in such a way that each branch of the fork (3) may slide prior to being locked, for adaptation of its length to ensure the positioning of the boat (B) on the cradle (2), the head of the fork (3) comprising a bracket (78) in which is received the ring of the coupling (79), the whole being joined together by means of an end piece (80), the structure of this fork (3) ensuring the tipping of the boat (B) on the cradle (2), automatically and progressively around the axis (XX).

5. A device according to claim 1, characterised in that the stringer (100a) of the chassis is arranged to receive a hydraulic ram (30A), of which the combination of the ram cylinder (12a) with a removable post (10a) carrying a plate (113a) is such that its action occurs practically along the axis of the load.

6. A device according to claim 5, characterised in that the support (2a) of the post (10c) and the ram (3a) co-operate with orienting means (6a) and (16a) as well as with pegs (40a, 41a, 42a and 43a) allowing a plurality of adjustments in height and in angular orientation of the movable post (10c), of its possible extension (31a) and consequently of the plate (30a) which it carries.

FIG.1

FIG.2

FIG.3

FIG.4

FIG. 6

FIG.5

FIG.7

FIG.8

EP 0 290 510 B1

FIG.11

Position 3

Position 2

Position 1

FIG.9

FIG.10

EP 0 290 510 B1